(19) Europäisches Patentamt
European Patent Office
Office européen des brevets

(11) **EP 4 788 014 A1**

(12) **EUROPEAN PATENT APPLICATION**
published in accordance with Art. 153(4) EPC

(43) Date of publication:
05.08.2026 Bulletin 2026/32

(21) Application number: 24878966.1

(22) Date of filing: 14.10.2024

(51) International Patent Classification (IPC):
*H04W 72/20* (2023.01)

(52) Cooperative Patent Classification (CPC):
H04L 5/00; H04W 72/20

(86) International application number:
PCT/CN2024/124758

(87) International publication number:
WO 2025/082322 (24.04.2025 Gazette 2025/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.10.2023 CN 202311365236

(71) Applicant: HUAWEI TECHNOLOGIES CO., LTD.
Shenzhen 518129 (CN)

(72) Inventors:
• WANG, Hanqing
  Shenzhen, Guangdong 518129 (CN)
• YUAN, Yiling
  Shenzhen, Guangdong 518129 (CN)
• GAO, Junhui
  Shenzhen, Guangdong 518129 (CN)
• WANG, Xiaohan
  Shenzhen, Guangdong 518129 (CN)

(74) Representative: Pfenning, Meinig & Partner mbB
Patent- und Rechtsanwälte
Theresienhöhe 11a
80339 München (DE)

(54) **CHANNEL STATE INFORMATION REPORTING METHOD AND RELATED APPARATUS**

(57) This application discloses a channel state information reporting method and a related apparatus. This application may be applied to a communication system related to downlink channel measurement and CSI reporting procedures. The method includes: performing channel measurement based on a received reference signal to obtain first CSI; and reporting the first CSI, where the first CSI includes at least one of a quantity of first bases, a quantity of second bases, a quantity of third bases, and a quantity of fourth bases, the third basis is used to determine a first basis, the fourth basis is used to determine a second basis, the first basis and the second basis are used to determine a precoding matrix or a channel matrix, at least one of the quantity of first bases and the quantity of second bases is obtained based on a first-type threshold, and at least one of the quantity of third bases and the quantity of fourth bases is obtained based on a second-type threshold. The terminal device has a specific degree of freedom to select a quantity of bases that better adapts to an actual downlink channel, thereby improving PMI precision.

FIG. 4

## Description

This application claims priority to Chinese Patent Application No. 202311365236.0, filed with the China National Intellectual Property Administration on October 18, 2023, and entitled "CHANNEL STATE INFORMATION REPORTING METHOD AND RELATED APPARATUS", which is incorporated herein by reference in its entirety.

## TECHNICAL FIELD

This application relates to the communication field, and in particular, to a channel state information reporting method and a related apparatus.

## BACKGROUND

As a key technology of a new radio (new radio, NR) system, massive multiple-antenna technology plays an important role in improving spectral efficiency of the system. In a massive (massive) multiple-input multiple-output (multiple-input multiple-output, MIMO) system, a base station needs to precode data before sending the data to user equipment (user equipment, UE). The precoding design depends on downlink channel state information (channel state information, CSI) from the base station to the UE. Therefore, obtaining accurate CSI is crucial to system performance.

In a time division duplex (time division duplex, TDD) system, reciprocity exists because an uplink channel and a downlink channel use a same frequency band. The base station may estimate an uplink channel from the UE to the base station through an uplink reference signal, for example, a sounding reference signal (sounding reference signal, SRS), and directly derive, based on channel reciprocity, a downlink channel from the uplink channel for precoding. However, in a frequency division duplex (frequency division duplex, FDD) system, an uplink and a downlink use different frequency bands with a large gap. This makes it impossible to infer a downlink channel from an uplink channel using channel reciprocity. Consequently, in the FDD system, downlink channel acquisition relies on CSI measurement and reporting of the UE.

Existing CSI measurement and reporting solutions are constrained by low PMI precision, driving the need for improved methodologies.

## SUMMARY

Embodiments of this application disclose a channel state information reporting method and a related apparatus, improving PMI precision in channel state information (channel state information, CSI) reported by a terminal device.

According to a first aspect, an embodiment of this application provides a communication method, where the method includes: performing channel measurement based on a received reference signal to obtain first CSI; and reporting the first CSI, where the first CSI includes at least one of a quantity of first bases and a quantity of second bases, or the first CSI includes at least one of a quantity of third bases and a quantity of fourth bases, the third basis is used to determine a first basis, and the fourth basis is used to determine a second basis; the first basis and the second basis are used to determine a precoding matrix or a channel matrix, at least one of the quantity of first bases and the quantity of second bases is obtained based on a first-type threshold, and at least one of the quantity of third bases and the quantity of fourth bases is obtained based on a second-type threshold.

In an existing solution, the quantity of first bases, the quantity of second bases, the quantity of third bases, and the quantity of fourth bases are all configured by a network side (for example, a network device). In other words, the network side configures a fixed value for each of the quantity of first bases, the quantity of second bases, the quantity of third bases, and the quantity of fourth bases. However, since the network side is not yet aware of an actual downlink channel, values configured by the network side for the quantity of first bases, the quantity of second bases, the quantity of third bases, and the quantity of fourth bases generally fail to adapt to the actual downlink channel, resulting in a loss of PMI precision. In this embodiment of this application, at least one of the quantity of first bases and the quantity of second bases is obtained based on the first-type threshold, and at least one of the quantity of third bases and the quantity of fourth bases is obtained based on the second-type threshold. In comparison with the solution in which the quantity of first bases, the quantity of second bases, the quantity of third bases, and the quantity of fourth bases are all configured by the network side (for example, the network device), this application grants the terminal device a specific degree of freedom to select at least one of the quantity of first bases, the quantity of second bases, the quantity of third bases, and the quantity of fourth bases. As a result, the terminal device may select a quantity of bases that better adapts to the actual downlink channel, thereby improving PMI precision.

In a possible implementation, the method further includes receiving a parameter configuration, where the parameter configuration includes at least one of the first-type threshold and the second-type threshold.

In this implementation, the parameter configuration is received to facilitate the determination of the quantity of bases based on at least one of the first-type threshold and the second-type threshold in the parameter configuration. At least one of the quantity of first bases and the quantity of second bases is obtained based on the first-type threshold. In other words, the first-type threshold is used to configure a value range for at least one of the quantity of first bases and the quantity of second bases, instead of a specific value for at least one of the quantity of first bases and the quantity of second bases. Similarly, at least one of the quantity of third bases and the quantity of fourth bases is obtained based on the second-type threshold. In other words, the second-type threshold is used to configure a value range for at least one of the quantity of third bases and the quantity of fourth bases, instead of a specific value for at least one of the quantity of third bases and the quantity of fourth bases. This application grants the terminal device a specific degree of freedom to select at least one of the quantity of first bases, the quantity of second bases, the quantity of third bases, and the quantity of fourth bases. As a result, the terminal device may select a quantity of bases that better adapts to actual downlink channel, thereby improving PMI precision.

In a possible implementation, the method is applied to the terminal device, and at least one of the first-type threshold and the second-type threshold is preconfigured by the terminal device, for example, preconfigured according to a communication protocol. In other words, at least one of the first-type threshold and the second-type threshold does not need to be obtained based on the parameter configuration.

In this implementation, at least one of the first-type threshold and the second-type threshold is preconfigured by the terminal device and does not need to be configured by the network side, thereby reducing resource overhead.

In a possible implementation, the first basis is a spatial domain eigenbasis, the second basis is a frequency domain eigenbasis, the third basis is a discrete Fourier transform (discrete Fourier transform, DFT) basis used to quantize a spatial domain eigenbasis, and the fourth basis is a DFT basis used to quantize a frequency domain eigenbasis.

In a possible implementation, the first-type threshold is used by the terminal device to determine at least one of the quantity of first bases and the quantity of second bases, and the second-type threshold is used by the terminal device to determine at least one of the quantity of third bases and the quantity of fourth bases. For example, the first-type threshold is used by the terminal device to determine the quantity of first bases and the quantity of second bases. For example, the second-type threshold is used by the terminal device to determine the quantity of third bases and the quantity of fourth bases.

In this implementation, the first-type threshold is used by the terminal device to determine at least one of the quantity of first bases and the quantity of second bases, and the second-type threshold is used by the terminal device to determine at least one of the quantity of third bases and the quantity of fourth bases. Since the terminal device has a specific degree of freedom to select a quantity of bases, the quantity of bases selected by the terminal device may better adapt to the actual downlink channel, thereby improving PMI precision.

In a possible implementation, the first-type threshold indicates at least one of a maximum value of the quantity of first bases and a maximum value of the quantity of second bases, and the second-type threshold indicates at least one of a maximum value of the quantity of third bases and a maximum value of the quantity of fourth bases.

In this implementation, the first-type threshold indicates at least one of the maximum value of the quantity of first bases and the maximum value of the quantity of second bases, and the second-type threshold indicates at least one of the maximum value of the quantity of third bases and the maximum value of the quantity of fourth bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold includes a first threshold, where the first threshold indicates a maximum value of a product of the quantity of first bases and the quantity of second bases.

In this implementation, the first threshold indicates the maximum value of the product of the quantity of first bases and the quantity of second bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold further includes a first value and a second value, where the first value indicates a minimum value of the quantity of first bases, and the second value indicates a minimum value of the quantity of second bases.

In this implementation, the first-type threshold further includes the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a second threshold and a third threshold, where the second threshold indicates a maximum value of the quantity of first bases, and the third threshold indicates a maximum value of the quantity of second bases.

In this implementation, the first-type threshold includes at least one of the second threshold and the third threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold further includes at least one of a first value and a second value, where the first value indicates a minimum value of the quantity of first bases, and the second value indicates a minimum value of the quantity of second bases. For example, the first-type threshold further includes the first value and the second value.

In this implementation, the first-type threshold further includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a first value and a second value and at least one of a third value and a fourth value, where the first value indicates a minimum value of the quantity of first bases, the second value indicates a minimum value of the quantity of second bases, a sum of the third value and the first value indicates a maximum value of the quantity of first bases, and a sum of the fourth value and the second value indicates a maximum value of the quantity of second bases. For example, the first-type threshold includes the first value, the second value, the third value, and the fourth value.

In this implementation, the first-type threshold includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients. The first-type threshold includes at least one of the third threshold and the fourth threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fourth threshold, where the fourth threshold indicates a maximum value of a sum of the quantity of third bases and the quantity of fourth bases.

In this implementation, the fourth threshold indicates the maximum value of the sum of the quantity of third bases and the quantity of fourth bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fifth threshold and a sixth threshold, where the fifth threshold indicates a maximum value of the quantity of third bases, and the sixth threshold indicates a maximum value of the quantity of fourth bases.

In this implementation, the second-type threshold includes the fifth threshold and the sixth threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the parameter configuration further includes a seventh threshold, and the method further includes: reporting second CSI, where the second CSI includes at least one of position information, amplitude information, and phase information of one or more non-zero elements in a first matrix, a quantity of elements in the one or more non-zero elements is determined based on the seventh threshold, and the first matrix is used to determine the precoding matrix or the channel matrix. The first matrix may be obtained through the channel measurement. For example, the seventh threshold indicates a maximum value of a quantity of elements in the first matrix included in the second CSI.

In this implementation, the quantity of non-zero elements in the first matrix included in the second CSI is determined based on the seventh threshold, preventing the terminal device from occupying excessive uplink resources for second CSI reporting.

In a possible implementation, the parameter configuration further includes a seventh threshold, and the method further includes: reporting second CSI, where the second CSI includes a second coefficient, the second coefficient is obtained from first coefficients based on coefficient priority, the first coefficients include at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients include at least one of position information, amplitude information, and phase information of a largest non-zero coefficient among the first coefficients, the second group of coefficients include at least one of position information, amplitude information, and phase information of x non-zero coefficients with a higher priority in a first submatrix of the first coefficients, the first submatrix is a matrix including first $K_{MIN}$ rows and first $D_{MIN}$ columns of the first coefficients, the third group of coefficients include at least one of position information, amplitude information, and phase information of x1 non-zero coefficients with a lower priority in the first submatrix, the fourth group of coefficients include at least one of position information, amplitude information, and phase information of y non-zero coefficients with a higher priority among coefficients in the first coefficients other than those in the first submatrix, the fifth group of coefficients include at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side. $K_{MIN}$ is a minimum value of the quantity of first bases in the first-type threshold, and $D_{MIN}$ is a minimum value of the quantity of second bases in the first-type threshold.

In this implementation, the second coefficient is obtained from the first coefficients based on coefficient priority, so that occupation of excessive uplink resources is avoided.

According to a second aspect, an embodiment of this application provides another channel state information reporting method. The method includes: sending a parameter configuration to a terminal device, where the parameter configuration includes at least one of a first-type threshold and a second-type threshold, the first-type threshold is used by the terminal device to determine at least one of a quantity of first bases and a quantity of second bases, the second-type threshold is used by the terminal device to determine at least one of a quantity of third bases and a quantity of fourth bases, the third basis is used to determine a first basis, and the fourth basis is used to determine a second basis, and the first basis and the second basis are used to determine a precoding matrix or a channel matrix; and receiving first CSI from the terminal device, where the first CSI includes at least one of the quantity of first bases, the quantity of second bases, the quantity of third bases, and the quantity of fourth bases.

In this embodiment of this application, the parameter configuration includes at least one of the first-type threshold and the second-type threshold. This grants the terminal device a specific degree of freedom to select a quantity of bases. Consequently, the quantity of bases selected by the terminal device can better adapt to the actual downlink channel, thereby improving PMI precision.

In a possible implementation, the first-type threshold indicates at least one of a maximum value of the quantity of first bases and a maximum value of the quantity of second bases, and the second-type threshold indicates at least one of a maximum value of the quantity of third bases and a maximum value of the quantity of fourth bases.

In this implementation, the first-type threshold indicates at least one of the maximum value of the quantity of first bases and the maximum value of the quantity of second bases, and the second-type threshold indicates at least one of the maximum value of the quantity of third bases and the maximum value of the quantity of fourth bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold includes a first threshold, where the first threshold indicates a maximum value of a product of the quantity of first bases and the quantity of second bases.

In this implementation, the first threshold indicates the maximum value of the product of the quantity of first bases and the quantity of second bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold further includes a first value and a second value, where the first value indicates a minimum value of the quantity of first bases, and the second value indicates a minimum value of the quantity of second bases.

In this implementation, the first-type threshold further includes the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a second threshold and a third threshold, where the second threshold indicates a maximum value of the quantity of first bases, and the third threshold indicates a maximum value of the quantity of second bases.

In this implementation, the first-type threshold includes at least one of the second threshold and the third threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold further includes at least one of a first value and a second value, where the first value indicates a minimum value of the quantity of first bases, and the second value indicates a minimum value of the quantity of second bases.

In this implementation, the first-type threshold further includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a first value and a second value and at least one of a third value and a fourth value, where the first value indicates a minimum value of the quantity of first bases, the second value indicates a minimum value of the quantity of second bases, a sum of the third value and the first value indicates a maximum value of the quantity of first bases, and a sum of the fourth value and the second value indicates a maximum value of the quantity of second bases.

In this implementation, the first-type threshold includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients. The first-type threshold includes at least one of the third threshold and the fourth threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fourth threshold, where the fourth threshold indicates a maximum value of a sum of the quantity of third bases and the quantity of fourth bases.

In this implementation, the fourth threshold indicates the maximum value of the sum of the quantity of third bases and the quantity of fourth bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fifth threshold and a sixth threshold, where the fifth threshold indicates a maximum value of the quantity of third bases, and the sixth threshold indicates a maximum value of the quantity of fourth bases.

In this implementation, the second-type threshold includes the fifth threshold and the sixth threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the parameter configuration further includes a seventh threshold, where the seventh threshold is used to determine a quantity of elements in first coefficients, the first coefficients include at least one of position information, amplitude information, and phase information of one or more non-zero elements in a first matrix, and the first matrix is used to determine the precoding matrix or the channel matrix.

In this implementation, the seventh threshold is used to determine the quantity of elements in the first coefficients, preventing the terminal device from occupying excessive uplink resources for second CSI reporting.

In a possible implementation, the method further includes: receiving second CSI from the terminal device, where the second CSI includes a second coefficient, the second coefficient is obtained from first coefficients based on coefficient priority, the first coefficients include at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients include at least one of position information, amplitude information, and phase information of a largest non-zero coefficient among the first coefficients, the second group of coefficients include at least one of position information, amplitude information, and phase information of x non-zero coefficients with a higher priority in a first submatrix of the first coefficients, the first submatrix is a matrix including first $K_{MIN}$ rows and first $D_{MIN}$ columns of the first coefficients, the third group of coefficients include at least one of position information, amplitude information, and phase information of x1 non-zero coefficients with a lower priority in the first submatrix, the fourth group of coefficients include at least one of position information, amplitude information, and phase information of y non-zero coefficients with a higher priority among coefficients in the first coefficients other than those in the first submatrix, the fifth group of coefficients include at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side.

In a possible implementation, the first basis is a spatial domain eigenbasis, the second basis is a frequency domain eigenbasis, the third basis is a two-dimensional DFT basis used to quantize a spatial domain eigenbasis, and the fourth basis is a DFT basis used to quantize a frequency domain eigenbasis.

According to a third aspect, an embodiment of this application provides a communication apparatus. The communication apparatus has a function of implementing behavior in the method embodiment in the first aspect. The communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to perform channel measurement based on a received reference signal, to obtain first CSI. The transceiver module is configured to report the first CSI, where the first CSI includes at least one of a quantity of first bases and a quantity of second bases, or the first CSI includes at least one of a quantity of third bases and a quantity of fourth bases, the third basis is used to determine a first basis, and the fourth basis is used to determine a second basis; the first basis and the second basis are used to determine a precoding matrix or a channel matrix, at least one of the quantity of first bases and the quantity of second bases is obtained based on a first-type threshold, and at least one of the quantity of third bases and the quantity of fourth bases is obtained based on a second-type threshold.

In a possible implementation, the transceiver module is further configured to receive a parameter configuration, where the parameter configuration includes at least one of the first-type threshold and the second-type threshold.

In a possible implementation, the parameter configuration further includes a seventh threshold, and the transceiver module is further configured to report second CSI, where the second CSI includes at least one of position information, amplitude information, and phase information of one or more non-zero elements in a first matrix, a quantity of elements in the one or more non-zero elements is determined based on the seventh threshold, the first matrix is obtained through the channel measurement, and the first matrix is used to determine the precoding matrix or the channel matrix.

In a possible implementation, the parameter configuration further includes a seventh threshold, and the transceiver module is further configured to report second CSI, where the second CSI includes a second coefficient, the second coefficient is obtained from first coefficients based on coefficient priority, the first coefficients include at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients include at least one of position information, amplitude information, and phase information of a largest non-zero coefficient among the first coefficients, the second group of coefficients include at least one of position information, amplitude information, and phase information of x non-zero coefficients with a higher priority in a first submatrix of the first coefficients, the first submatrix is a matrix including first $K_{MIN}$ rows and first $D_{MIN}$ columns of the first coefficients, the third group of coefficients include at least one of position information, amplitude information, and phase information of x1 non-zero coefficients with a lower priority in the first submatrix, the fourth group of coefficients include at least one of position information, amplitude information, and phase information of y non-zero coefficients with a higher priority among coefficients in the first coefficients other than those in the first submatrix, the fifth group of coefficients include at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side.

For possible implementations of the communication apparatus in the third aspect, refer to the possible implementations of the first aspect.

For technical effects brought by the possible implementations of the third aspect, refer to descriptions of technical effects of the possible implementations of the first aspect.

According to a fourth aspect, an embodiment of this application provides another communication apparatus. The communication apparatus has a function of implementing behavior in the method embodiment in the second aspect. The communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to: send a parameter configuration to a terminal device, where the parameter configuration includes at least one of a first-type threshold and a second-type threshold, the first-type threshold is used by the terminal device to determine at least one of a quantity of first bases and a quantity of second bases, the second-type threshold is used by the terminal device to determine at least one of a quantity of third bases and a quantity of fourth bases, the third basis is used to determine a first basis, and the fourth basis is used to determine a second basis, and the first basis and the second basis are used to determine a precoding matrix or a channel matrix; and receive first CSI from the terminal device, where the first CSI includes at least one of the quantity of first bases, the quantity of second bases, the quantity of third bases, and the quantity of fourth bases. The processing module is configured to parse CSI that includes the first CSI and that is received by the transceiver module.

In a possible implementation, the transceiver module is further configured to receive second CSI from the terminal device, where the second CSI includes a second coefficient, the second coefficient is obtained from first coefficients based on coefficient priority, the first coefficients include at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients include at least one of position information, amplitude information, and phase information of a largest non-zero coefficient among the first coefficients, the second group of coefficients include at least one of position information, amplitude information, and phase information of x non-zero coefficients with a higher priority in a first submatrix of the first coefficients, the first submatrix is a matrix including first $K_{MIN}$ rows and first $D_{MIN}$ columns of the first coefficient, the third group of coefficients include at least one of position information, amplitude information, and phase information of x1 non-zero coefficients with a lower priority in the first submatrix, the fourth group of coefficients include at least one of position information, amplitude information, and phase information of y non-zero coefficients with a higher priority among coefficients in the first coefficients other than those in the first submatrix, the fifth group of coefficients include at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side.

For possible implementations of the communication apparatus in the fourth aspect, refer to the possible implementations of the second aspect.

For technical effects brought by the possible implementations of the fourth aspect, refer to descriptions of technical effects of the possible implementations of the second aspect.

According to a fifth aspect, an embodiment of this application provides another communication apparatus. The communication apparatus includes one or more processors, and the one or more processors are configured to process data (including information), so that the method in the first aspect or the second aspect is implemented.

Optionally, the communication apparatus further includes a memory. The memory stores a program or instructions. When the program or the instructions are executed by the processor, the communication apparatus is enabled to perform the method according to the first aspect or the second aspect. For example, the communication apparatus may be a chip, the processor is a processing circuit in the chip, and the memory is a random access memory or a cache in the chip.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may be alternatively integrated into one component. In other words, the processor and the memory may be alternatively integrated together.

In a possible implementation, the communication apparatus further includes the transceiver. The transceiver is configured to: receive a signal, send a signal, or the like.

According to a sixth aspect, this application provides another communication apparatus. The communication apparatus includes a processing circuit and an interface circuit, the interface circuit is configured to obtain data or output data, and the processing circuit is configured to perform the method according to the first aspect or the second aspect.

According to a seventh aspect, this application provides a computer-readable storage medium. The computer-readable storage medium stores a computer program, the computer program includes program instructions, and when the program instructions are executed, a computer is enabled to perform the method according to the first aspect or the second aspect.

According to an eighth aspect, this application provides a computer program product. The computer program product includes a computer program, the computer program includes program instructions, and when the program instructions are executed, a computer is enabled to perform the method according to the first aspect or the second aspect.

According to a ninth aspect, this application provides a chip, including a communication interface and a processor. The communication interface is configured to receive and send a signal of the chip. The processor is configured to execute computer program instructions, to enable a communication apparatus including the chip to perform the method according to the first aspect or the second aspect.

According to a tenth aspect, an embodiment of this application provides a communication system, including the communication apparatus according to any one of the third aspect or the possible implementations of the third aspect, and the communication apparatus according to any one of the fourth aspect or the possible implementations of the fourth aspect.

**BRIEF DESCRIPTION OF DRAWINGS**

FIG. 1 is a diagram of a basic procedure of downlink channel measurement and CSI reporting;

FIG. 2 is a diagram illustrating a codebook based on a statistical eigen-subspace for representing a channel matrix or a precoding matrix according to an embodiment of this application;

FIG. 3 is a diagram of an architecture of a communication system to which an embodiment of this application may be applied;

FIG. 4 is a flowchart of a channel state information reporting method according to an embodiment of this application;

FIG. 5 is a flowchart of another channel state information reporting method according to an embodiment of this application;

FIG. 6 is a flowchart of another channel state information reporting method according to an embodiment of this application;

FIG. 7 is a diagram of a structure of a PMI under a CSI omitting mechanism according to an embodiment of this application;

FIG. 8 is a diagram of a structure of a communication apparatus 800 according to an embodiment of this application;

FIG. 9 is an example diagram of a structure of a network device and a terminal device according to an embodiment of this application; and

FIG. 10 is a diagram of a structure of another apparatus 100 according to an embodiment of this application.

**DESCRIPTION OF EMBODIMENTS**

In the specification, claims, or accompanying drawings of this application, the terms "first", "second", and the like are intended only to distinguish between different objects but do not indicate a particular order. It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not indicated in listed steps or units, but instead, optionally further include steps or units that are not listed, or optionally further include other steps or units inherent to these processes, methods, products, or devices.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in the specification may be combined with another embodiment.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" generally represents an "or" relationship between associated objects.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

It should be understood that, in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. The information may undergo necessary processing, for example, a format change, between the source end and the destination end of information sending. However, the destination end may understand valid information from the source end. Similar descriptions in this application may be understood similarly, and details are not described herein.

For ease of understanding the solutions of this application, the following first describes terms and technical solutions in embodiments of this application.

Downlink channel measurement and CSI reporting: In an FDD system, because different frequency bands are used in an uplink and a downlink, and a spacing between the uplink and the downlink frequency bands is large, a downlink channel cannot be directly deduced from an uplink channel based on reciprocity of the uplink and downlink channels. Therefore, in the FDD system, the downlink channel is obtained based on CSI measurement and reporting of the UE.

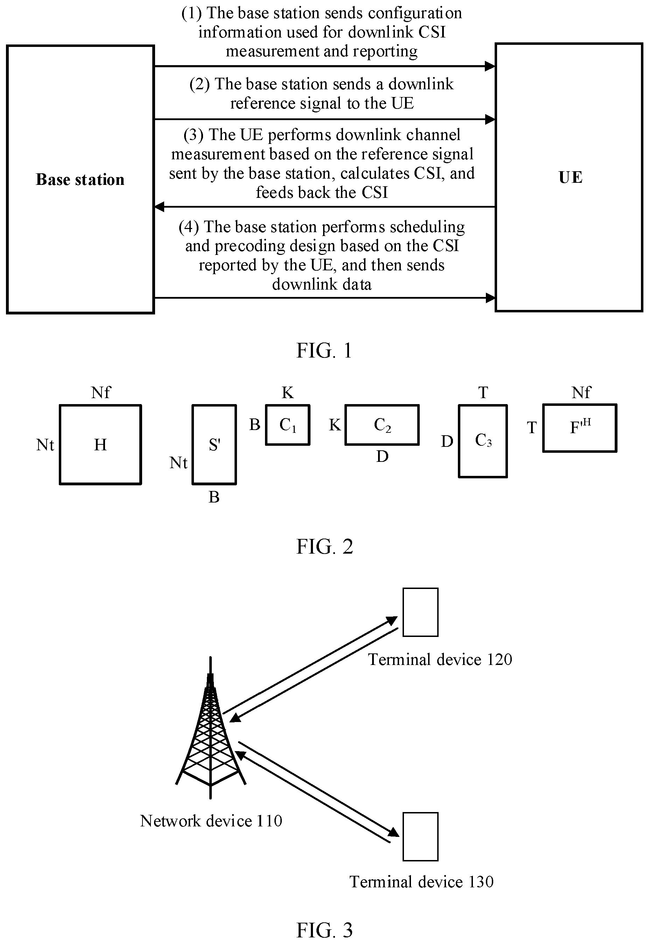

FIG. 1 is a diagram of a basic procedure of downlink channel measurement and CSI reporting. As shown in FIG. 1, the basic procedure of downlink channel measurement and CSI reporting includes the following steps:

(1) A base station sends configuration information used for downlink CSI measurement and reporting, where the configuration information is used to notify UE of a channel measurement time, a reference signal resource (that is, a resource occupied by a downlink reference signal that is sent by the base station and that is used to measure a downlink channel), UE reporting behavior, and a resource used by the UE to report CSI;

(2) the base station sends a downlink reference signal, for example, a channel state information reference signal (channel state information reference signal, CSI-RS), to the UE, so that the UE performs downlink channel measurement;

(3) the UE performs downlink channel measurement based on the reference signal sent by the base station, calculates the CSI, and feeds back the CSI, where the CSI that needs to be fed back may include: a rank indication (rank indication, RI) used to determine a quantity of transport streams of downlink data, a channel quality indicator (channel quality indicator, CQI) used to determine a modulation and coding order of downlink data transmission, and a precoding matrix indicator (precoding matrix indicator, PMI) used to determine precoding for downlink data transmission; and

(4) the base station performs scheduling and precoding design based on the CSI reported by the UE, and then sends the downlink data.

Long-periodicity and short-periodicity CSI feedback: An enhanced type II (enhanced Type II, eType II) codebook in the R16 version jointly compresses a PMI in spatial domain and frequency domain based on angle-delay domain sparseness, and a spatial domain basis, a frequency domain basis, and a combination coefficient need to be reported. Sparseness of a combination coefficient matrix is limited because both the spatial domain basis and the frequency domain basis specified in the protocol are DFT bases. In addition, in an actual communication scenario, especially in a scenario in which a channel changes slowly, a basis change speed is very slow, and long-periodicity reporting may be performed. However, in R16, the basis and the combination coefficient cannot be reported in different periodicities. To make full use of sparseness of a channel in the spatial domain and the frequency domain and further improve PMI feedback precision, a codebook feedback manner combining long and short periodicities is proposed in recent years. In this codebook feedback manner, a linear combination of bases known by a group of a terminal device and a network device (for example, a base station) is used to approximate a statistical eigen-subspace basis of a downlink channel. When the long-periodicity feedback is performed by using the statistical eigenbasis, the combination coefficient is sparser, thereby reducing reporting overhead. In one manner, an eigen-subspace basis of the spatial domain and an eigen-subspace basis of the frequency domain are approximated. The eigen-subspace basis of the spatial domain may be obtained by extracting an eigenvector of a covariance matrix of the spatial domain, and the eigen-subspace basis of the frequency domain may be obtained by extracting an eigenvector of a covariance matrix of the frequency domain. For example, the eigen-subspace basis of the spatial domain may include an eigenvector corresponding to a large eigenvalue of the covariance matrix of the spatial domain, and the eigen-subspace basis of the frequency domain may include an eigenvector corresponding to a large eigenvalue of the covariance matrix of the frequency domain.

A channel matrix or a precoding matrix may be represented by using the following formula:

$$\mathbf{H} \approx \mathbf{S'C_1C_2C_3F'}^H \quad (1)$$

Herein, H represents a channel matrix or a precoding matrix. $\mathbf{S'}$ represents a spatial domain basis matrix. For example, the spatial domain basis matrix may include a two-dimensional (2 dimensions, 2D)-DFT vector. The terminal device may select different columns in a spatial domain basis set to form $\mathbf{S'}$ corresponding to the channel matrix or the precoding matrix $\mathbf{H}$. $\mathbf{C_1}$ represents a combination coefficient of the spatial domain basis matrix. $\mathbf{S'C_1}$ obtains a group of reconstructed spatial domain bases (spatial domain eigenbases) through linear combination of bases in $\mathbf{S'}$. The reconstructed spatial domain basis (namely, $\mathbf{S'C_1}$) is a quantized approximation of an eigen-subspace basis of the spatial domain. $\mathbf{F'}$ represents a frequency domain basis matrix. For example, the frequency domain basis matrix may include a DFT vector. The terminal device may select different columns in a frequency domain basis set to form $\mathbf{F'}$ corresponding to the channel matrix or the precoding matrix $\mathbf{H}$. $\mathbf{C_3}$ represents a combination coefficient of the frequency domain basis matrix. $\mathbf{C_3F'}^H$ obtains a group of reconstructed frequency domain bases (frequency domain eigenbases) through linear combination of bases in $\mathbf{F'}$. The reconstructed frequency domain basis (namely, $\mathbf{C_3F'}^H$) is a quantized approximation of an eigen-subspace basis of the frequency domain. $\mathbf{C_2}$ represents a linear combination coefficient matrix corresponding to the reconstructed spatial domain basis and the reconstructed frequency domain basis. In this specification, for ease of description, the eigen-subspace basis is referred to as an eigenbasis for short. In other words, the eigenbasis in this specification may be an eigen-subspace basis. The terminal device reports $\mathbf{S'}$, $\mathbf{C_1}$, $\mathbf{F'}$, and $\mathbf{C_3}$ in a long periodicity, and reports $\mathbf{C_2}$ in a short periodicity.

FIG. 2 is a diagram illustrating a codebook based on a statistical eigen-subspace for representing a channel matrix or a precoding matrix according to an embodiment of this application. As shown in FIG. 2, a channel matrix H or a precoding matrix H is a matrix of Nt rows and Nf columns, a spatial domain basis matrix $\mathbf{S'}$ is a matrix of (Nt) rows and B columns, a combination coefficient $\mathbf{C_1}$ of the spatial domain basis matrix is a matrix of B rows and K columns, a linear combination coefficient matrix $\mathbf{C_2}$ corresponding to a reconstructed spatial domain basis and a reconstructed frequency domain basis is a matrix of K rows and D columns, a combination coefficient $\mathbf{C_3}$ of a frequency domain basis matrix is a matrix of D rows and T columns, and the frequency domain basis matrix $\mathbf{F'}$ is a matrix of T rows and Nf columns, where Nt, Nf, K, D, B, and T are all integers greater than 0. K is a quantity of spatial domain eigenbases (a quantity of first bases below), D is a quantity of frequency domain eigenbases (a quantity of second bases below), B is a quantity of DFT basis s (a quantity of third bases below) used to quantize the spatial domain eigenbasis, and T is a quantity of DFT basis s (a quantity of fourth bases below) used to quantize the frequency domain eigenbasis. Nt may be a quantity of ports of a channel state information reference signal (channel state information reference signal, CSI-RS), and may be simply understood as a quantity of antennas of a base station, and a channel estimated by the terminal device has such a large dimension. Nf represents a quantity of subbands. The terminal device needs to estimate channels on a plurality of subbands, and then combine the channels for compressed feedback. $C_1F'^H$

When K, D, B, and T are all configured by a network side, since the network side is not yet aware of an actual downlink channel, these quantities of bases configured by the network side usually fail to adapt to the actual downlink channel. $S'$, $C_1$, $F'$, $C_3$, and $C_2$ that are obtained through calculation by the terminal device based on the quantities of bases (namely, K, D, B, and T) configured on the network side usually cannot well approximate the channel matrix or the precoding matrix. In other words, a difference between $S'C_1C_2C_3F'^H$ and an actual channel matrix or precoding matrix is large, resulting in low PMI precision.

A CSI measurement and reporting solution in the conventional related technology has a problem of low PMI precision. Therefore, a CSI measurement and reporting solution for improving PMI precision needs to be studied. The channel state information reporting solution provided in this application is a CSI measurement and reporting solution, to improve PMI precision. A main idea of the channel state information reporting solution provided in this application is as follows: A terminal side (for example, a terminal device) is provided with a specific degree of freedom to select a parameter. In other words, the terminal device has a specific degree of freedom to select quantities of bases (namely, K, D, B, and T), so that $S'$, $C_1$, $F'$, $C_3$, and $C_2$ that are obtained through calculation by the terminal device based on these quantities of bases better approximate a channel matrix or a precoding matrix. In other words, a difference between $S'C_1C_2C_3F'^H$ and the actual channel matrix or precoding matrix is reduced. In addition, to control a data volume of CSI reported by the terminal device, a degree of freedom of selecting a quantity of bases by the terminal side is correspondingly restricted, to prevent the terminal device from occupying excessive uplink resources for CSI reporting, and facilitate configuration of reporting resources by the network side.

The following describes a communication system to which the technical solutions provided in this application are applicable.

The technical solutions provided in this application may be applied to various communication systems, for example, a 5th generation (5th generation, 5G) or NR system, a long term evolution (long term evolution, LTE) system, an LTE frequency division duplex (frequency division duplex, FDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device to device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. The technical solutions provided in embodiments of this application are also applicable to another communication system related to downlink channel measurement and CSI reporting. The foregoing communication systems to which the technical solutions provided in embodiments of this application are applicable are merely examples for description. A communication system to which the technical solutions provided in this application are applicable is not limited thereto. This is uniformly described herein, and details are not described below again.

A first device in the communication system may send a signal to a second device or receive a signal from a third device. The signal may include information, signaling, data, or the like. The device may alternatively be replaced with an entity, a network entity, a communication device, a communication module, a node, a communication node, or the like. In this disclosure, a network element is used as an example for description. The first device may be a network device or a terminal device, the second device may be a network device or a terminal device, and the third device may be a network device or a terminal device. For example, the communication system may include at least one terminal device and at least one network device. The network device may send a downlink signal to the terminal device, and/or the terminal device may send an uplink signal to the network device. It may be understood that the terminal device in this disclosure may be replaced with a first device, the network device may be replaced with a second device, and the terminal device and the network device perform a corresponding communication method in this disclosure.

FIG. 3 is a diagram of an architecture of a communication system to which an embodiment of this application may be applied. As shown in FIG. 3, the communication system includes a network device 110, a terminal device 120, and a terminal device 130. The communication system to which embodiments of this application may be applicable includes one or more terminal devices. The terminal device 120 and the terminal device 130 are used as examples of the terminal devices in the communication system. FIG. 3 is merely a diagram. A quantity of network devices and a quantity of terminal devices included in the communication system are not limited in embodiments of this application. The terminal device 120 and the terminal device 130 may access the network device 110, and communicate with the network device 110.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in this embodiment of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not merely a hardware device, but is used to implement a powerful function through software support, data interaction, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs.

In this embodiment of this application, an apparatus configured to implement a function of the terminal device may be a terminal device, or may be an apparatus that can support a terminal device in implementing the function, for example, a chip system. The apparatus may be mounted in the terminal device or used in matching with the terminal device. In embodiments of this application, the chip system may include a chip, or may include a chip and another discrete component. In embodiments of this application, only an example in which the apparatus configured to implement the function of the terminal device is a terminal device is used for description, and constitutes no limitation on the solutions in embodiments of this application.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names, for example, a RAN node, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a primary station, a secondary station, a multistandard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used for the network device are not limited in embodiments of this application. The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

In embodiments of this application, an apparatus configured to implement a function of the network device may be a network device, or may be an apparatus that can support a network device in implementing the function, for example, a chip system, a hardware circuit, a software module, or a combination of a hardware circuit and a software module. The apparatus may be mounted in the network device or used in combination with the network device. In embodiments of this application, only an example in which the apparatus configured to implement the function of the network device is a network device is used for description, and constitutes no limitation on the solutions in embodiments of this application.

It should be noted that a network architecture described in embodiments of this application is intended to describe the technical solutions in embodiments of this application more clearly, and does not constitute limitations to the technical solutions in embodiments of this application. A person of ordinary skill in the art may learn that the technical solutions provided in embodiments of this application are also applicable to a similar technical problem as a network architecture evolves and a new service scenario emerges.

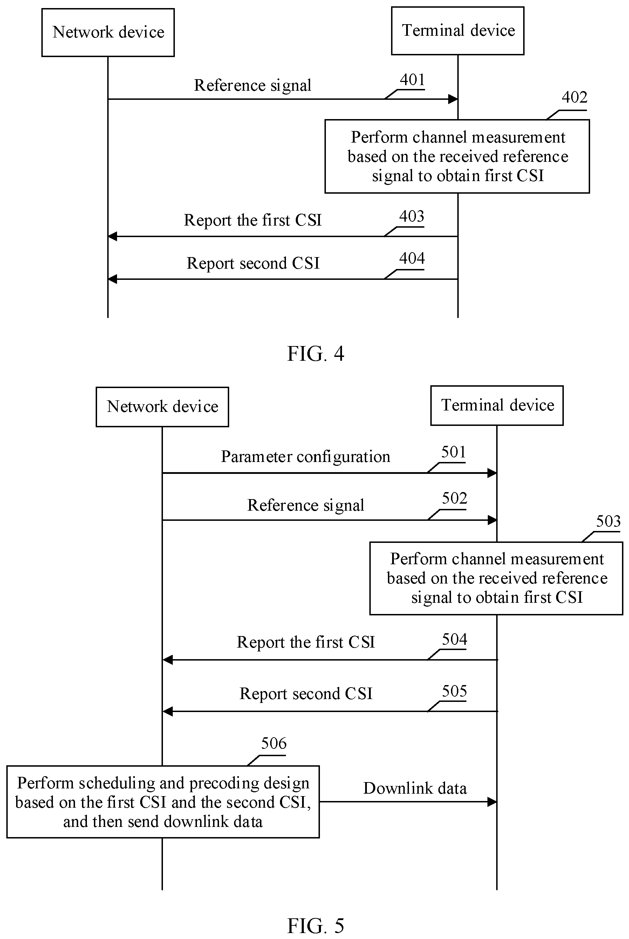

The following first describes the technical solutions provided in this application with reference to FIG. 4. FIG. 4 is a flowchart of a channel state information reporting method according to an embodiment of this application. As shown in FIG. 4, the method includes the following steps.

401: A network device sends a reference signal to a terminal device.

Correspondingly, the terminal device receives the reference signal from the network device (for example, a base station). For example, the reference signal is a CSI-RS.

402: The terminal device performs channel measurement based on the received reference signal, to obtain first CSI.

The first CSI may include at least one of a quantity of first bases and a quantity of second bases, or the first CSI includes at least one of a quantity of third bases and a quantity of fourth bases. In other words, the first CSI includes at least one of the quantity of first bases, the quantity of second bases, the quantity of third bases,

and the quantity of fourth bases. The third basis is used to determine a first basis (namely, a spatial domain eigenbasis), and the fourth basis is used to determine a second basis (namely, a frequency domain eigenbasis). Refer to FIG. 2. The quantity of first bases may be a quantity K of columns of $\mathbf{C}_1$ or $\mathbf{S}'\mathbf{C}_1$, the quantity of second bases may be a quantity D of rows of $\mathbf{C}_3$ or $\mathbf{C}_3\mathbf{F}'^H$, the quantity of third bases may be a quantity B of columns of $\mathbf{S}'$, and the quantity of fourth bases may be a quantity T of rows of $\mathbf{F}'^H$. The first basis and the second basis are used to determine a precoding matrix or a channel matrix, for example, a precoding matrix or a channel matrix corresponding to a downlink channel between the network device and the terminal device. The first basis may be $\mathbf{S}'\mathbf{C}_1$, the second basis may be $\mathbf{C}_3\mathbf{F}'^H$, the third basis may be $\mathbf{S}'$, and the fourth basis may be $\mathbf{F}'$. For example, the first CSI may further include $\mathbf{S}'$, $\mathbf{C}_1$, $\mathbf{F}'$, and $\mathbf{C}_3$. For meanings of $\mathbf{S}'$, $\mathbf{C}_1$, $\mathbf{F}'$, and $\mathbf{C}_3$, refer to the foregoing descriptions. Details are not described herein again.

It should be noted that, in this embodiment of this application, specific values of the quantity of first bases (corresponding to K), the quantity of second bases (corresponding to D), the quantity of third bases (corresponding to B), and the quantity of fourth bases (corresponding to T) are not configured by a network side, but are determined or selected by the terminal device under a specific constraint. In other words, the terminal device has a specific degree of freedom to select at least one of the quantity of first bases (corresponding to K), the quantity of second bases (corresponding to D), the quantity of third bases (corresponding to B), and the quantity of fourth bases (corresponding to T). In a possible implementation, at least one of the quantity of first bases and the quantity of second bases is obtained based on a first-type threshold. In other words, the terminal device obtains (determines) at least one of the quantity of first bases and the quantity of second bases based on the first-type threshold. For example, the first-type threshold may indicate at least a maximum value of the quantity of first bases and a maximum value of the quantity of second bases, and the terminal device determines the quantity of first bases and the quantity of second bases based on the first-type threshold. That the terminal device determines the quantity of first bases and the quantity of second bases based on the first-type threshold may be: The terminal device determines a value range of the quantity of first bases and a value range of the quantity of second bases based on the first-type threshold. The terminal device may select the quantity of first bases from the value range of the quantity of first bases determined based on the first-type threshold, and select the quantity of second bases from the value range of the quantity of second bases determined based on the first-type threshold. In a possible implementation, at least one of the quantity of third bases and the quantity of fourth bases is obtained based on a second-type threshold. In other words, the terminal device obtains (determines) at least one of the quantity of third bases and the quantity of fourth bases based on the second-type threshold. For example, the second-type threshold may indicate at least a maximum value of the quantity of third bases and a maximum value of the quantity of fourth bases, and the terminal device determines the quantity of third bases and the quantity of fourth bases based on the second-type threshold. That the terminal device determines the quantity of third bases and the quantity of fourth bases based on the second-type threshold may be: The terminal device determines a value range of the quantity of third bases and a value range of the quantity of fourth bases based on the second-type threshold. The terminal device may select the quantity of third bases from the value range of the quantity of third bases determined based on the second-type threshold, and select the quantity of fourth bases from the value range of the quantity of third bases determined based on the second-type threshold.

A possible implementation of step 402 is as follows: The first basis is used as an example. The terminal device performs eigenvalue decomposition on a spatial domain covariance matrix obtained through channel measurement, to obtain eigenvectors corresponding to all non-zero eigenvalues. These eigenvectors form a basis matrix #1, where each column in the basis matrix #1 is an eigenvector corresponding to a non-zero eigenvalue. An actual channel matrix (or a channel matrix) obtained through measurement is projected onto the basis matrix #1, and the following operations are performed a plurality of times (quantities of first bases selected in different operations are different): Within a value range that is of the quantity of first bases and that is limited or indicated by the first-type threshold, several columns (that is, the quantity of first bases) corresponding to maximum eigenvalues in the basis matrix #1 and projection coefficients corresponding to the several columns are selected to be linearly combined, to obtain a matrix #2, where different quantities of first bases correspond to different matrices #2; and a linear combination that minimizes an error between the obtained matrix #2 and the actual channel matrix is selected, so that the first basis (that is, the selected several columns) and the quantity of first bases (that is, the selected quantity of columns) can be determined. The terminal device may determine the second basis (the frequency domain basis) and the quantity of second bases in a similar manner. Details are not described herein again. The terminal device may project the channel matrix or the precoding matrix onto the spatial domain eigenbasis and the frequency domain eigenbasis, to obtain $C_2'$. The terminal device may report the first coefficients to the network device based on $C_2'$, so that the network device obtains $C_2$ based on the first coefficients.

403: The terminal device reports the first CSI to the network device.

Correspondingly, the network device receives the first CSI from the terminal device. That the terminal device reports the first CSI to the network device may be:

The terminal device reports $S'$, $C_1$, $F'$, $C_3$, and a quantity of bases (including at least one of the quantity of first bases, the quantity of second bases, the quantity of third bases, and the quantity of fourth bases) to the network device in a long periodicity (for example, 160 ms, 320 ms, 480 ms, or 640 ms).

In a possible implementation, if a quantity of CSI-RS ports is small, for example, when the quantity of CSI-RS ports is 4, the network side (for example, the network device) may directly configure $K_{MAX} = 0$ and $B_{MIN} = 4$ for the terminal device, and the terminal device does not report $S'$ and $C_1$ when performing reporting in a long periodicity, and does not need to report the quantity of first bases and the quantity of third bases.

404: The terminal device reports second CSI to the network device.

Correspondingly, the network device receives the second CSI from the terminal device. The second CSI may include a second coefficient or at least one of position information, amplitude information, and phase information of one or more non-zero elements in a first matrix. The network device may obtain $C_2$ based on the second CSI. The first matrix may be obtained through the channel measurement, or may be obtained through channel measurement performed after step 402. The first matrix is used to determine the precoding matrix or the channel matrix. For example, the second CSI includes at least one of position information, amplitude information, and phase information of all non-zero elements in the first matrix. For example, the second CSI includes at least one of position information, amplitude information, and phase information of some non-zero elements in the first matrix, and a quantity of elements in the first matrix included in the second CSI is determined based on a seventh threshold. For example, the seventh threshold indicates the quantity of elements in the first matrix included in the second CSI. The second coefficient may be obtained from the first coefficients based on coefficient priority. For example, the second coefficient includes part of coefficients with a higher priority among the first coefficients. The first coefficients include an amplitude, a phase, and a location of one or more non-zero elements in the first matrix. For example, the first coefficients include amplitudes, phases, and locations of all non-zero elements in the first matrix. For example, the first coefficients include amplitudes, phases, and locations of some non-zero elements in the first matrix, and a quantity of elements in the first coefficients is determined based on a seventh threshold. Before performing step 404, the terminal device may perform the following operation: The terminal device performs channel measurement based on the received reference signal, to obtain the second CSI. An example in which the terminal device performs channel measurement based on the received reference signal to obtain the second CSI is as follows: The terminal device performs channel measurement based on the received reference signal to obtain the first matrix, that is, a weighting coefficient matrix $C_2'$ of the first basis and the second basis; and the terminal device obtains at least one of position information, amplitude information, and phase information of one or more non-zero elements in the first matrix based on the seventh threshold, and generates the second CSI.

That the terminal device reports the second CSI to the network device may be: The terminal device reports the second CSI to the network device in a short periodicity (for example, 5 ms, 10 ms, 20 ms, or 40 ms), so that the network device obtains $C_2$ based on the second CSI. A sequence of step 404 and step 403 is not limited.

In this embodiment of this application, at least one of the quantity of first bases and the quantity of second bases is obtained based on the first-type threshold, and at least one of the quantity of third bases and the quantity of fourth bases is obtained based on the second-type threshold. In comparison with the solution in which the quantity of first bases, the quantity of second bases, the quantity of third bases, and the quantity of fourth bases are all configured by the network side (for example, the network device), this application grants the terminal device a specific degree of freedom to select at least one of the quantity of first bases, the quantity of second bases, the quantity of third bases, and the quantity of fourth bases. As a result, the terminal device may select a quantity of bases that better adapts to the actual downlink channel, thereby improving PMI precision.

The following describes a possible implementation of the first-type threshold, a possible implementation of the second-type threshold, a possible implementation in which the terminal device determines the quantity of first bases and the quantity of second bases based on the first-type threshold, and a possible implementation in which the terminal device determines the quantity of third bases and the quantity of fourth bases based on the second-type threshold.

In a possible implementation, the first-type threshold includes a first threshold, where the first threshold indicates a maximum value of a product of the quantity of first bases and the quantity of second bases. For example, the first-type threshold includes the first threshold $\Gamma_1$, and $\Gamma_1$ is the maximum value of the product of the quantity of first bases and the quantity of second bases. In other words, $K \times D \le \Gamma_1$. K and D selected by the terminal device need to meet a constraint of $K \times D \le \Gamma_1$. Under the constraint, the product of the quantity of first bases and the quantity of second bases is limited to be not greater than $\Gamma_1$, and the total quantity of elements in $C_2$' that needs to be reported by the UE is also limited to be $\Gamma_1$, that is, a dimension of $C_2$' (the first matrix). In this application, both K and D are integers greater than 0, and $\Gamma_1$ is an integer greater than 0. In other words, the terminal device may select (or determine) the quantity of first bases and the quantity of second bases on a premise that the constraint (that is, $K \times D \le \Gamma_1$) provided by $\Gamma_1$ is met. $\Gamma_1$ may be set based on an actual requirement. This is not limited in this application. For example, $\Gamma_1$ = quantity of CSI-RS ports * quantity of reporting subbands * ratio, where the ratio may be one half, one quarter, one eighth, or the like. The quantity of reporting subbands is Nf. For example, when the quantity of CSI-RS ports is 2, the quantity of reporting subbands is 8, and the ratio is one quarter, $\Gamma_1$ may be 4; or when the quantity of CSI-RS ports is 4, the quantity of reporting subbands is 8, and the ratio is one half, $\Gamma_1$ may be 16; or when the quantity of CSI-RS ports is 8, the quantity of reporting subbands is 8, and the ratio is one eighth, $\Gamma_1$ may be 8. In this implementation, the first threshold indicates the maximum value of the product of the quantity of first bases and the quantity of second bases. This application grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold includes a first threshold, a first value, and a second value, where the first threshold indicates a maximum value of a product of the quantity of first bases and the quantity of second bases, the first value indicates a minimum value of the quantity of first bases, and the second value indicates a minimum value of the quantity of second bases. The terminal device may select (or determine) the quantity of first bases and the quantity of second bases when a constraint (that is, $K \times D \le \Gamma_1$) provided by $\Gamma_1$, a constraint of the minimum value of the quantity of first bases, and a constraint of the minimum value of the quantity of second bases are met. In other words, the quantity of first bases selected by the terminal device needs to be greater than or equal to the minimum value of the quantity of first bases, the quantity of second bases selected by the terminal device needs to be greater than or equal to the minimum value of the quantity of second bases, and the product of the quantity of first bases and the quantity of second bases that are selected by the terminal device is less than or equal to the first threshold. For example, the first-type threshold includes $\Gamma_1$, $K_{MIN}$, and $D_{MIN}$, where $\Gamma_1$ is the first threshold, $K_{MIN}$ is the minimum value of the quantity of first bases, and $D_{MIN}$ is the minimum value of the quantity of second bases. $\Gamma_1$, $K_{MIN}$, and $D_{MIN}$ may be set based on an actual requirement. This is not limited in this application. $\Gamma_1$, $K_{MIN}$, and $D_{MIN}$ are integers greater than 0. For example, $\Gamma_1$ = quantity of CSI-RS ports * quantity of reporting subbands * ratio, where the ratio may be one half, one quarter, one eighth, or the like. $K_{MIN}$ may be any one of 2, 4, 6, 8, 12, or the like, and $D_{MIN}$ may be one quarter, one eighth, or the like of the quantity of reporting subbands. For example, when the quantity of CSI-RS ports is 2, the quantity of reporting subbands is 8, and the ratio is one quarter, $\Gamma_1$ may be 4, $K_{MIN}$ may be 2, and $D_{MIN}$ may be 1; or when the quantity of CSI-RS ports is 4, the quantity of reporting subbands is 8, and the ratio is one half, $\Gamma_1$ may be 16, $K_{MIN}$ may be 4, and $D_{MIN}$ may be 2; or when the quantity of CSI-RS ports is 8, the quantity of reporting subbands is 16, and the ratio is one quarter, $\Gamma_1$ may be 32, $K_{MIN}$ may be 6, and $D_{MIN}$ may be 4. In this implementation, the first-type threshold further includes the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a second threshold and a third threshold, where the second threshold indicates a maximum value of the quantity of first bases, and the third threshold indicates a maximum value of the quantity of second bases. For example, the first-type threshold includes $K_{MAX}$ and $D_{MAX}$, where $K_{MAX}$ represents the maximum value of the quantity of first bases, and $D_{MAX}$ represents the maximum value of the quantity of second bases. The terminal device may select (or determine) the quantity of first bases (namely, K) and the quantity of second bases (namely, D) on a premise that constraints $K \leq K_{MAX}$ and $D \leq D_{MAX}$ are met. $K_{MAX}$ and $D_{MAX}$ are integers greater than 1. The second threshold and the third threshold may be set based on an actual requirement. This is not limited in this application. For example, $K_{MAX}$ is greater than or equal to the quantity of CSI-RS ports, and $K_{MAX}$ is 16, 18, 20, 24, or the like. $D_{MAX}$ is the quantity of reporting subbands, one half of the quantity of reporting subbands, or the like. For example, when the quantity of CSI-RS ports is 2, $K_{MAX}$ may be 16, and $D_{MAX}$ may be 2; or when the quantity of CSI-RS ports is 4, $K_{MAX}$ may be 18, and $D_{MAX}$ may be 4; or when the quantity of CSI-RS ports is 8, $K_{MAX}$ may be 24, or $D_{MAX}$ may be 8. In this implementation, the first-type threshold includes at least one of the second threshold and the third threshold. This application grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the first-type threshold includes at least one of a second threshold and a third threshold and at least one of a first value and a second value, where the second threshold indicates a maximum value of the quantity of first bases, the third threshold indicates a maximum value of the quantity of second bases, the first value indicates a minimum value of the quantity of first bases, and the second value indicates a minimum value of the quantity of second bases. For example, the first-type threshold includes $K_{MIN}$, $D_{MIN}$, $K_{MAX}$, and $D_{MAX}$, where $K_{MIN}$ is the minimum value of the quantity of first bases, $D_{MIN}$ is the minimum value of the quantity of second bases, $K_{MAX}$ represents the maximum value of the quantity of first bases, and

$D_{MAX}$ represents the maximum value of the quantity of second bases. The terminal device may select (or determine) the quantity of first bases (namely, K) and the quantity of second bases (namely, D) on a premise that constraints $K_{MIN} \leq K \leq K_{MAX}$ and $D_{MIN} \leq D \leq D_{MAX}$ are met. For example, if the terminal device selects a quantity of spatial domain bases corresponding to single polarization, a quantity K of spatial domain bases selected for each polarization is between $K_{MIN}$ and $K_{MAX}$, and the quantity of spatial domain bases actually selected by the terminal device is 2K. For example, when the quantity of CSI-RS ports is small, for example, when the quantity of CSI-RS ports is 4, $K_{MAX} = 0$ and $B_{MIN} = 4$ may be directly configured for the terminal device, and the terminal device does not report **S'** and **C**$_1$ when performing reporting in a long periodicity, and does not need to report the quantity of first bases and the quantity of third bases. Values of $K_{MIN}$, $D_{MIN}$, $K_{MAX}$, and $D_{MAX}$ may be set based on an actual requirement. This is not limited in this application. Both $K_{MIN}$ and $D_{MIN}$ are integers greater than 0, and both $K_{MAX}$ and $D_{MAX}$ are integers greater than 1. For example, $K_{MAX}$ is greater than or equal to the quantity of CSI-RS ports. $K_{MAX}$ is 16, 18, 20, or 24, or the like. $D_{MAX}$ is the quantity of reporting subbands, one half of the quantity of reporting subbands, or the like. $K_{MIN}$ may be any one of 2, 4, 6, 8, 12, or the like. $D_{MIN}$ may be one quarter, one eighth, or the like of the quantity of reporting subbands. For example, when the quantity of CSI-RS ports is 2, and the quantity of reporting subbands is 8, $K_{MIN}$ may be 4, $D_{MIN}$ may be 2, $K_{MAX}$ may be 16, and $D_{MAX}$ may be 8; or when the quantity of CSI-RS ports is 4, and the quantity of reporting subbands is 8, $K_{MIN}$ may be 6, $D_{MIN}$ may be 4, $K_{MAX}$ may be 20, and $D_{MAX}$ may be 4; or when the quantity of CSI-RS ports is 8, and the quantity of reporting subbands is 16, $K_{MIN}$ may be 8, $D_{MIN}$ may be 8, $K_{MAX}$ may be 24, and $D_{MAX}$ may be 8. In this implementation, the terminal device may determine, based on the first-type threshold, that the value range of the quantity of first bases is [$K_{MIN}$, $K_{MAX}$], and determine, based on the first-type threshold, that the value range of the quantity of second bases is [$D_{MIN}$, $D_{MAX}$]. In this implementation, the first-type threshold includes at least one of the second threshold and the third threshold. This application grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources. The first-type threshold includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients.

In a possible implementation, the first-type threshold includes at least one of a first value and a second value and at least one of a third value and a fourth value, where the first value indicates a minimum value of the quantity of first bases, the second value indicates a minimum value of the quantity of second bases, a sum of the third value and the first value indicates a maximum value of the quantity of first bases, and a sum of the fourth value and the second value indicates a maximum value of the quantity of second bases. For example, the first-type threshold includes $K_{MIN}$, $D_{MIN}$, $K_1$, and $D_1$, where $K_{MIN}$ is the first value, $D_{MIN}$ is the second value, $K_1$ is the third value, and $D_1$ is the fourth value. The terminal device may select the quantity of first bases from an interval $[K_{MIN}, K_{MIN} + K_1]$, and select the quantity of second bases from an interval $[D_{MIN}, D_{MIN} + D_1]$. The terminal device may determine, based on the first-type threshold, that the value range of the quantity of first bases is $[K_{MIN}, K_{MIN} + K_1]$, and determine, based on the first-type threshold, that the value range of the quantity of second bases is $[D_{MIN}, D_{MIN} + D_1]$. Both $K_{MIN}$ and $D_{MIN}$ are integers greater than 0, and both $K_1$ and $D_1$ are integers greater than 1. ($[K_{MIN}, K_{MIN} + K_1]$) is equal to the maximum value of the quantity of first bases, namely, $K_{MAX}$. ($D_{MIN} + D_1$) is equal to the maximum value of the quantity of second bases, namely, $D_{MAX}$. In this implementation, the first-type threshold includes at least one of the first value and the second value. This enables the terminal device, when reporting resources configured by the network side for the terminal device are insufficient, to determine, based on the first value and the second value, a coefficient with a higher priority among to-be-reported coefficients, and subsequently omit some of the to-be-reported coefficients. The first-type threshold includes at least one of the third threshold and the fourth threshold. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fourth threshold, where the fourth threshold indicates a maximum value of a sum of the quantity of third bases and the quantity of fourth bases. For example, the second-type threshold includes the fourth threshold $\Gamma_2$, and $\Gamma_2$ is the maximum value of the sum of the quantity of third bases and the quantity of fourth bases. In other words, $B + T \leq \Gamma_2$. $\Gamma_2$ is an integer greater than 1. A value of $\Gamma_2$ may be set based on an actual requirement. This is not limited in this application. For example, $\Gamma_2$ = quantity of CSI-RS ports * ratio #1 + quantity of reporting subbands * ratio #2, where the ratio #1 is one half, one quarter, one eighth, or the like, and the ratio #2 is one half, one quarter, one eighth, or the like. For example, $\Gamma_2$ = (quantity of CSI-RS ports + quantity of reporting subbands) * ratio, where the ratio is one half, one quarter, one eighth, or the like. For example, when the quantity of CSI-RS ports is 2, and the quantity of reporting subbands is 8, $\Gamma_2$ may be 5; or when the quantity of CSI-RS ports is 4, and the quantity of reporting subbands is 16, $\Gamma_2$ may be 10; or when the quantity of CSI-RS ports is 8, and the quantity of reporting subbands is 16, $\Gamma_2$ may be 6. B and T selected by the terminal device need to meet a constraint of $B + T \leq \Gamma_2$. Under the constraint, the sum of the quantity of third bases and the quantity of fourth bases is limited to be not greater than $\Gamma_2$. For example, the terminal device may freely select B and T based on the parameter configuration from the network device on a premise that the constraint $B + T \leq \Gamma_2$ is met, and report **S'** and **F'** in a long periodicity. In this implementation, the fourth threshold indicates the maximum value of the sum of the quantity of third bases and the quantity of fourth bases. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

In a possible implementation, the second-type threshold includes a fifth threshold and a sixth threshold, where the fifth threshold indicates a maximum value of the quantity of third bases, and the sixth threshold indicates a maximum value of the quantity of fourth bases. For example, the second-type threshold includes $B_{MAX}$ and $T_{MAX}$, where $B_{MAX}$ is the maximum value (namely, the fifth threshold) of the quantity of third bases, and $T_{MAX}$ is the maximum value (namely, the sixth threshold) of the quantity of fourth bases. The terminal device may select (or determine) the quantity of first bases (namely, K) and the quantity of second bases (namely, D) on a premise that constraints $B \leq B_{MAX}$ and $T \leq T_{MAX}$ are met. In other words, B selected by the terminal device needs to meet a constraint of being less than or equal to $B_{MAX}$, and T selected by the terminal device needs to meet a constraint of being less than or equal to $T_{MAX}$. The terminal device may determine, based on the second-type threshold, that the value range of the quantity of third bases is less than or equal to $B_{MAX}$, and determine, based on the second-type threshold, that the value range of the quantity of fourth bases is less than or equal to $T_{MAX}$. $T_{MAX}$ and $B_{MAX}$ are integers greater than 1. Values of $T_{MAX}$ and $B_{MAX}$ may be set based on an actual requirement. This is not limited in this application. For example, $B_{MAX}$ may be greater than or equal to the quantity of CSI-RS ports. For example, $B_{MAX}$ is 16, 18, 20, or 24. $T_{MAX}$ may be equal to the quantity of reporting subbands or one half of the quantity of reporting subbands. When the quantity of CSI-RS ports is 2, and the quantity of reporting subbands is 8, $B_{MAX}$ may be 16, and $T_{MAX}$ may be 4; or when the quantity of CSI-RS ports is 4, and the quantity of reporting subbands is 16, $B_{MAX}$ may be 18, and $T_{MAX}$ may be 16; or when the quantity of CSI-RS ports is 8, and the quantity of reporting subbands is 16, $B_{MAX}$ may be 24, and $T_{MAX}$ may be 8. This grants the terminal device a specific degree of freedom to select a quantity of bases. Consequently, the quantity of bases selected by the terminal device can better adapt to the actual downlink channel, thereby improving PMI precision. It also controls CSI reporting overhead of the terminal device, preventing excessive occupation of uplink resources.

FIG. 5 is a flowchart of another channel state information reporting method according to an embodiment of this application. The method procedure in FIG. 5 is a possible implementation of the method described in FIG. 4. As shown in FIG. 5, the method includes the following steps.

501: A network device sends a parameter configuration to a terminal device.

Correspondingly, the terminal device receives the parameter configuration from the network device. The parameter configuration includes at least one of the first-type threshold and the second-type threshold. For example, the parameter configuration includes the first-type threshold and the second-type threshold. The first-type threshold is used by the terminal device to determine at least one of a quantity of first bases and a quantity of second bases, and the second-type threshold is used by the terminal device to determine at least one of a quantity of third bases and a quantity of fourth bases. For descriptions of the quantity of first bases, the quantity of second bases, the quantity of third bases, and the quantity of fourth bases, refer to the descriptions in FIG. 4. A possible implementation of step 501 is as follows: The network device sends, to the terminal device, configuration information used for downlink CSI measurement and reporting, where the configuration information includes information about the parameter configuration. For example, the configuration information is used to notify UE of a channel measurement time, a reference signal resource (that is, a resource occupied by a downlink reference signal sent by a base station), CSI reporting behavior of the UE, a resource used by the UE to report the CSI, and the parameter configuration.

502: The network device sends a reference signal to the terminal device.

Correspondingly, the terminal device receives the reference signal from the network device (for example, a base station).

503: The terminal device performs channel measurement based on the received reference signal, to obtain first CSI.

For step 503, refer to step 402 in FIG. 4.

504: The terminal device reports the first CSI to the network device.

Correspondingly, the network device receives the first CSI from the terminal device. For step 504, refer to step 403 in FIG. 4.

505: The terminal device reports second CSI to the network device.

Correspondingly, the network device receives the second CSI from the terminal device. For step 505, refer to step 404 in FIG. 4.

506: The network device performs scheduling and precoding design based on the first CSI and the second CSI, and then sends downlink data.

In this embodiment of this application, the parameter configuration sent by the network device to the terminal device includes at least one of the first-type threshold and the second-type threshold, and the terminal device may be granted a specific degree of freedom to select a quantity of bases. The quantity of bases selected by the terminal device based on at least one of the first-type threshold and the second-type threshold can better adapt to the actual downlink channel, thereby improving PMI precision.

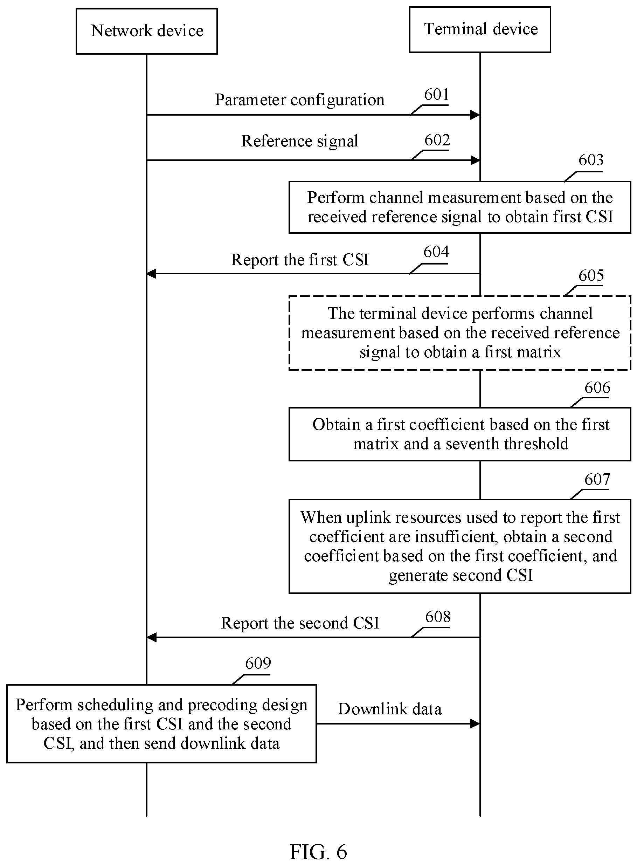

FIG. 6 is a flowchart of another channel state information reporting method according to an embodiment of this application. The method procedure in FIG. 6 is a possible implementation of the method described in FIG. 4. As shown in FIG. 6, the method includes the following steps.

601: A network device sends a parameter configuration to a terminal device.

Correspondingly, the terminal device receives the parameter configuration from the network device. The parameter configuration includes the first-type threshold and a seventh threshold. The seventh threshold is used to determine a quantity of elements in a second coefficient. For example, the seventh threshold indicates a maximum value of a quantity of elements in the first coefficients. A function of the first coefficients may be to enable the network device to obtain a first matrix or at least one of position information, amplitude information, and phase information of some elements in a first matrix. The first coefficients include at least one of position information, amplitude information, and phase information of one or more non-zero elements in the first matrix. The first matrix is used to determine the precoding matrix or the channel matrix. The first matrix may be $C_2'$. Optionally, the parameter configuration further includes the second-type threshold. For step 601, refer to step 501 in FIG. 5.

For example, the first-type threshold includes $K_{MIN}$, $D_{MIN}$, $K_{MAX}$, and $D_{MAX}$, where $K_{MIN}$ is the minimum value of the quantity of first bases, $D_{MIN}$ is the minimum value of the quantity of second bases, $K_{MAX}$ represents the maximum value of the quantity of first bases, and $D_{MAX}$ represents the maximum value of the quantity of second bases. The terminal device may select (or determine) the quantity of first bases (namely, K) and the quantity of second bases (namely, D) on a premise that constraints $K_{MIN} \leq K \leq K_{MAX}$ and $D_{MIN} \leq D \leq D_{MAX}$ are met. For example, the first-type threshold includes $K_{MIN}$, $D_{MIN}$, $K_1$, and $D_1$, where $K_{MIN}$ is the first value, $D_{MIN}$ is the second value, $K_1$ is the third value, and $D_1$ is the fourth value. The terminal device may select the quantity of first bases from an interval $[K_{MIN}, K_{MIN} + K_1]$, and select the quantity of second bases from an interval $[D_{MIN}, D_{MIN} + D_1]$.

602: The network device sends a reference signal to the terminal device.

Correspondingly, the terminal device receives the reference signal from the network device (for example, a base station).

603: The terminal device performs channel measurement based on the received reference signal, to obtain first CSI.

For step 603, refer to step 402 in FIG. 4.

604: The terminal device reports the first CSI to the network device.

Correspondingly, the network device receives the first CSI from the terminal device. The first CSI may include the quantity of first bases and the quantity of second bases. Optionally, the first CSI further includes a quantity of third bases and a quantity of fourth bases. The first CSI may further include $S'$, $C_1'$, $F'$, and $C_3$. For step 604, refer to step 403 in FIG. 4.

605: The terminal device performs channel measurement based on the received reference signal, to obtain a first matrix.

The first matrix may be $C_2'$. Step 605 is optional. The terminal device may obtain the first matrix in step 603.

606: The terminal device obtains the first coefficients based on the first matrix and the seventh threshold.

A quantity of elements in the first coefficients may be the seventh threshold. The first coefficients include at least one of position information, amplitude information, and phase information of one or more non-zero elements in the first matrix. A possible implementation of step 606 is as follows: The terminal device obtains at least one of position information, amplitude information, and phase information of a plurality of non-zero elements in the first matrix, to obtain the first coefficients, where a quantity of elements in the first coefficients is equal to the seventh threshold.

607: When uplink resources used to report the first coefficients are insufficient, the terminal device obtains a second coefficient based on the first coefficients and generates second CSI.

The second CSI includes the second coefficient. Insufficient uplink resources for reporting the first coefficients means that the uplink resources used by the terminal device to report the first coefficients are insufficient to carry the first coefficients. In other words, the terminal device needs more uplink resources to carry the first coefficients. The second coefficient is obtained from the first coefficients based on coefficient priority. For example, the second coefficient includes part of coefficients with a higher priority among the first coefficients. A possible implementation in which the terminal device obtains the second coefficient based on the first coefficients is as follows: The first coefficients include a plurality of groups of coefficients with different priorities, and the terminal device omits one or more groups of coefficients among the first coefficients in a descending order of the priorities of the groups of coefficients to obtain the second coefficient. A quantity of coefficients in the second coefficient may be determined by the uplink resources used by the terminal device to report the first coefficients. For example, upon omission of a group of coefficients with lowest priority from the first coefficients, if the uplink resources used by the terminal device to report the first coefficients are sufficient to carry the remaining first coefficients, the remaining coefficients become the second coefficient. For another example, upon omission of a group of coefficients with lowest priority from the first coefficients, if the uplink resources used by the terminal device to report the first coefficients are insufficient to carry the remaining first coefficients, the terminal device continues to omit the group of coefficients with the lowest priority from the first coefficients until the uplink resources used by the terminal device to report the first coefficients are sufficient to carry the remaining first coefficients. For example, a first group of coefficients, a second group of coefficients, a third group of coefficients, a fourth group of coefficients, and a fifth group of coefficients among the first coefficients have sequentially decreasing priorities. The first group of coefficients include at least one of position information, amplitude information, and phase information of a largest non-zero coefficient in the first coefficients. The second group of coefficients include at least one of position information, amplitude information, and phase information of x non-zero coefficients with a higher priority in a first submatrix of the first coefficients, where the first submatrix is a matrix including first $K_{MIN}$ rows and first $D_{MIN}$ columns of the first coefficients. The third group of coefficients include at least one of position information, amplitude information, and phase information of x1 non-zero coefficients with a lower priority in the first submatrix. The fourth group of coefficients include at least one of position information, amplitude information, and phase information of y non-zero coefficients with a higher priority among the coefficients in the first coefficients other than those in the first submatrix. The fifth group of coefficients include at least one of position information, amplitude information, and phase information of y1 non-zero coefficients with a lower priority among the coefficients in the first coefficients other than those in the first submatrix. Here, x, x1, y, and y1 are all integers greater than 0, $K_{MIN}$ is a quantity of first bases configured by a network side, and $D_{MIN}$ is a quantity of second bases configured by the network side. When reporting resources configured on the network side are insufficient, the terminal device may omit the coefficients from the first coefficients in the following order to obtain the second coefficient: the fifth group of coefficients, the fourth group of coefficients, the third group of coefficients, and the second group of coefficients.

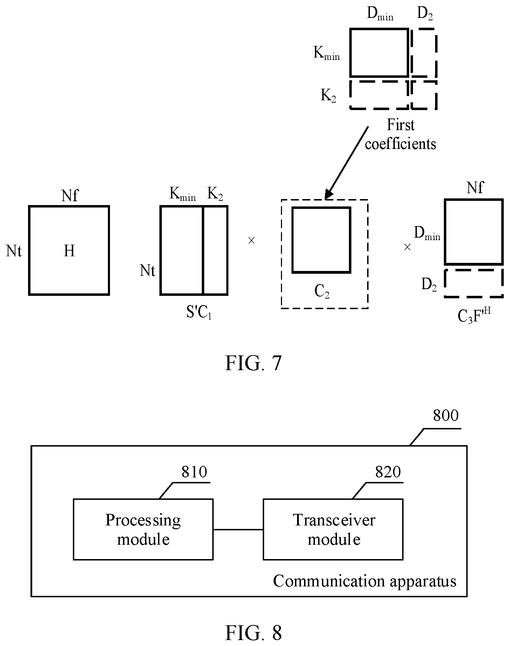

Step 607 may be understood as follows: When the uplink resources used to report the first coefficients are insufficient, an omitting mechanism is applied to report the first coefficients. In other words, some elements in the first coefficients are reported, thereby avoiding excessive consumption of uplink resources for reporting the first coefficients. FIG. 7 is a diagram of a structure of a PMI under a CSI omitting mechanism according to an embodiment of this application. As shown in FIG. 7, H is a channel matrix or a precoding matrix, $S'C_1$ represents a spatial domain eigenbasis, $C_3F'^H$ represents a frequency domain eigenbasis, and $C_2$ represents a linear combination coefficient matrix corresponding to the reconstructed spatial domain basis and the frequency domain basis. $C_2$ is obtained by a network device based on a second coefficient reported by a terminal device, where the second coefficient reported by the terminal device is obtained from the first coefficients based on coefficient priority. $(K_{MIN}+K_2)$ represents a quantity of first bases (namely, K) selected by the terminal device, and $(D_{MIN}+D_2)$ represents a quantity of second bases (namely, D) selected by the terminal device. The first coefficients calculated by the terminal device form a matrix of $(K_{MIN}+K_2)$ rows and $(D_{MIN}+D_2)$ columns, where $K_{MIN}$ is a minimum value of the quantity of first bases, $D_{MIN}$ is a minimum value of the quantity of second bases, $K_2$ represents a quantity of first bases additionally selected by the terminal device based on $K_{MIN}$, and $D_2$ represents a quantity of second bases additionally selected by the terminal device based on $D_{MIN}$. $K_2$ is less than or equal to $K_1$, and $D_2$ is less than or equal to $D_1$. Alternatively, $(K_{MIN}+K_2)$ is less than or equal to $K_{MAX}$, and $(D_{MIN}+D_2)$ is less than or equal to $D_{MAX}$. Since the second coefficient reported by the terminal device is obtained among the first coefficients based on coefficient priority, and $C_2$ is obtained by the network device based on the second coefficient reported by the terminal device, it may be understood that $C_2$ is obtained among the first coefficients based on coefficient priority. Refer to FIG. 7.

As shown in FIG. 7, the coefficients among the first coefficients may be grouped as follows, with priorities decreasing from highest to lowest:

group 0 (corresponding to the first group of coefficients): position information of strongest coefficients;

group 1 (corresponding to the second group of coefficients): at least one of position information, amplitude information, and phase information of x non-zero coefficients with a higher priority in a coefficient matrix (a matrix formed by first $K_{MIN}$ rows and first $D_{MIN}$ columns) shown by solid lines in FIG. 7;

group 2 (corresponding to the third group of coefficients): at least one of position information, amplitude information, and phase information of x1 non-zero coefficients with a lower priority in the coefficient matrix (a matrix formed by first $K_{MIN}$ rows and first $D_{MIN}$ columns) shown by solid lines in FIG. 7;

group 3 (corresponding to the third group of coefficients): at least one of position information, amplitude information, and phase information of y non-zero coefficients with a higher priority in a coefficient matrix shown by dashed lines in FIG. 7; and

group 4 (corresponding to the third group of coefficients): at least one of position information, amplitude information, and phase information of y1 non-zero coefficients with a lower priority in the coefficient matrix shown by dashed lines in FIG. 7.

When resources that are configured by the network device and that are used by the terminal device to report the CSI are insufficient, the terminal device may omit coefficients from $C_2'$ in an order of the group 4, the group 3, the group 2, and the group 1.

608: The terminal device reports second CSI to the network device.

Correspondingly, the network device receives the second CSI from the terminal device. For step 608, refer to step 404 in FIG. 4.

609: The network device performs scheduling and precoding design based on the first CSI and the second CSI, and then sends downlink data.

In this embodiment of this application, the parameter configuration sent by the network device to the terminal device includes at least one of the first-type threshold and the second-type threshold, and the terminal device may be granted a specific degree of freedom to select a quantity of bases. The quantity of bases selected by the terminal device based on at least one of the first-type threshold and the second-type threshold can better adapt to the actual downlink channel, thereby improving PMI precision. When the quantity of non-zero elements in the first matrix is greater than the seventh threshold, the first coefficients are obtained based on the priority of the non-zero element in the first matrix, to report the first coefficients, preventing excessive occupation of uplink resources for CSI reporting.

The following describes, with reference to the accompanying drawings, structures of communication apparatuses that can implement the communication methods provided in embodiments of this application. The following briefly describes only the communication apparatuses. For details about solution implementation, refer to the descriptions in the foregoing method embodiments. Details are not described below again.

FIG. 8 is a diagram of a structure of a communication apparatus 800 according to an embodiment of this application. The communication apparatus 800 may correspondingly implement functions or steps implemented by a terminal device in the foregoing method embodiments, or may correspondingly implement functions or steps implemented by a network device in the foregoing method embodiments. The communication apparatus may include a processing module 810 and a transceiver module 820. In a possible implementation, the apparatus may further include a storage unit. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be independently disposed, or may be partially or completely integrated. For example, the transceiver module 820 may include a sending module and a receiving module. The sending module may be a transmitter, and the receiving module may be a receiver. An entity corresponding to the transceiver module 820 may be a transceiver circuit, for example, a transceiver or a communication interface.

In some possible implementations, the communication apparatus 800 can correspondingly implement behavior and functions of the terminal device in the foregoing method embodiments. For example, the communication apparatus 800 may be the terminal device, or may be a component (for example, a chip or a circuit) used in the terminal device. For example, the transceiver module 820 may be configured to perform all receiving or sending operations performed by the terminal device in the embodiments in FIG. 4 to FIG. 6. For example, the processing module 810 may be configured to perform all operations performed by the terminal device in the embodiments in FIG. 4 to FIG. 6 except the sending and receiving operations.

In some possible implementations, the communication apparatus 800 can correspondingly implement behavior and functions of the network device in the foregoing method embodiments. For example, the communication apparatus 800 may be the network device, or may be a component (for example, a chip or a circuit) used in the network device. For example, the transceiver module 820 may be configured to perform all receiving or sending operations performed by the network device in the embodiments in FIG. 4 to FIG. 6. For example, the processing module 810 may be configured to perform all operations performed by the network device in the embodiments in FIG. 4 to FIG. 6 except the sending and receiving operations.

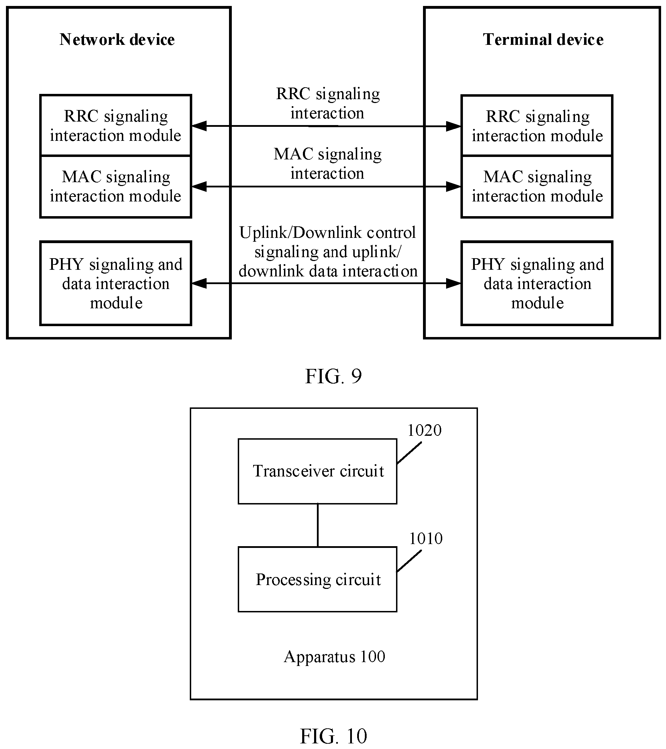

FIG. 9 is an example diagram of a structure of a network device and a terminal device according to an embodiment of this application. The network device may be an entity configured to send or receive a signal on a network side, for example, a gNB in an NR network. The terminal device may be an entity configured to receive or transmit a signal on a user side. As shown in FIG. 9, the network device and the terminal device each include a radio resource control (radio resource control, RRC) signaling interaction module, a media access control (media access control, MAC) signaling interaction module, and a physical layer (physical layer, PHY) signaling and data interaction module. The RRC signaling interaction module is a module configured to send and receive RRC signaling by the network device and the terminal device. The MAC signaling interaction module is a module configured to send and receive MAC signaling by the network device and the terminal device. The PHY signaling and data interaction module is a module configured to send and receive uplink/downlink control signaling and uplink/downlink data by the network device and the terminal device, and simultaneously transmit a reference signal for CSI measurement.

FIG. 10 is a diagram of a structure of another apparatus 100 according to an embodiment of this application. The apparatus in FIG. 10 may be the terminal device or a chip used in the terminal device, or may be the network device or a chip used in the network device. As shown in FIG. 10, the apparatus 100 includes a processing circuit 1010 and a transceiver circuit 1020.

In some embodiments of this application, the processing circuit 1010 and the transceiver circuit 1020 may be configured to perform functions, operations, or the like performed by the terminal device. For example, the transceiver circuit 1020 is configured to perform all receiving or sending operations performed by the terminal device in the embodiments in FIG. 4 to FIG. 6. For example, the processing circuit 1010 is configured to perform all operations performed by the terminal device in the embodiments in FIG. 4 to FIG. 6 except the sending and receiving operations.

In some embodiments of this application, the processing circuit 1010 and the transceiver circuit 1020 may be configured to perform functions, operations, or the like performed by the network device. For example, the transceiver circuit 1020 is configured to perform all receiving or sending operations performed by the network device in the embodiments in FIG. 4 to FIG. 6. For example, the processing circuit 1010 is configured to perform all operations performed by the network device in the embodiments in FIG. 4 to FIG. 6 except the sending and receiving operations.

In a possible implementation, the transceiver circuit 1020 includes at least one transceiver, and the processing circuit 1010 includes at least one processor or a circuit that is in at least one processor and that is used for processing or control.

The transceiver is configured to communicate with another device/apparatus through a transmission medium. The processor sends and receives data and/or signaling through the transceiver, and is configured to implement the methods in the foregoing method embodiments. The processor may implement functions of the processing module 810, and the transceiver may implement functions of the transceiver module 820. Optionally, the transceiver may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, like a touchscreen, a display, or a keyboard, is mainly configured to: receive data input by a user and output data to the user.

Optionally, the apparatus 100 may further include at least one memory, configured to store program instructions and/or data. The memory is coupled to the processor. The coupling in this embodiment of this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. At least one of the at least one memory may be included in the processor.

The processor may read a software program in the memory, interpret and execute instructions of the software program, and process data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends, through the antenna, a radio frequency signal to the outside in an electromagnetic wave form. When data is sent to the apparatus 100, the radio frequency circuit receives a radio frequency signal through the antenna, converts the radio frequency signal into a baseband signal, and outputs the baseband signal to the processor. The processor converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the apparatus 100.

A specific connection medium between the transceiver, the processor, and the memory is not limited in embodiments of this application.

In embodiments of this application, the processor may be one of the following components: a general-purpose processor, a digital signal processor, an application-specific integrated circuit, a field-programmable gate array or another programmable logic device, a discrete gate or a transistor logic device, a discrete hardware component, or all or some circuits used for processing functions in the foregoing components. The processor may implement or perform the methods, the steps, and the logical block diagrams disclosed in embodiments of this application. The general-purpose processor may be a microprocessor or any conventional processor or the like. Steps of the methods disclosed with reference to embodiments of this application may be directly executed and accomplished by a hardware processor, or may be executed and accomplished by using a combination of hardware and software modules in the processor.

In a possible implementation, the processing circuit 1010 includes at least one logic circuit, and the transceiver circuit 1020 includes at least one interface.

The processing module 810 in FIG. 8 may be implemented through the logic circuit, and the transceiver module 820 in FIG. 8 may be implemented through the interface. The logic circuit may be a chip, a processing circuit, an integrated circuit, a system-on-chip (system-on-chip, SoC), or the like, and the interface may be a communication interface, an input/output interface, or the like. In this embodiment of this application, the logic circuit and the interface may be coupled to each other. A specific manner of connection between the logical circuit and the interface is not limited in this embodiment of this application.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiment is performed.

This application further provides a communication system, including the network device and the terminal device.

This application further provides a chip. The chip includes a communication interface and a processor. The communication interface is configured to receive and send a signal of the chip. The processor is configured to execute computer program instructions, to enable a communication apparatus including the chip to perform the method in the foregoing embodiments.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer programs or instructions. When the computer programs or instructions are loaded and executed on a computer, all or some of the procedures or functions in embodiments of this application are performed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A channel state information reporting method, comprising:

   performing channel measurement based on a received reference signal to obtain first channel state information CSI; and
   reporting the first CSI, wherein the first CSI comprises at least one of a quantity of first bases and a quantity of second bases, or the first CSI comprises at least one of a quantity of third bases and a quantity of fourth bases, the third basis is used to determine a first basis, and the fourth basis is used to determine a second basis; the first basis and the second basis are used to determine a precoding matrix or a channel matrix, at least one of the quantity of first bases and the quantity of second bases is obtained based on a first-type threshold, and at least one of the quantity of third bases and the quantity of fourth bases is obtained based on a second-type threshold.

2. The method according to claim 1, wherein the method further comprises:
   receiving a parameter configuration, wherein the parameter configuration comprises at least one of the first-type threshold and the second-type threshold.

3. The method according to claim 2, wherein the first-type threshold comprises a first threshold, and the first threshold indicates a maximum value of a product of the quantity of first bases and the quantity of second bases.

4. The method according to claim 3, wherein the first-type threshold further comprises a first value and a second value, the first value indicates a minimum value of the quantity of first bases, and the second value indicates a minimum value of the quantity of second bases.

5. The method according to claim 2, wherein the first-type threshold comprises at least one of a second threshold and a third threshold, the second threshold indicates a maximum value of the quantity of first bases, and the third threshold indicates a maximum value of the quantity of second bases.

6. The method according to claim 5, wherein the first-type threshold further comprises at least one of a first value and a second value, the first value indicates a minimum value of the quantity of first bases, and the second value indicates a minimum value of the quantity of second bases.

7. The method according to claim 2, wherein the first-type threshold comprises at least one of a first value and a second value and at least one of a third value and a fourth value, the first value indicates a minimum value of the quantity of first bases, the second value indicates a minimum value of the quantity of second bases, a sum of the third value and the first value indicates a maximum value of the quantity of first bases, and a sum of the fourth value and the second value indicates a maximum value of the quantity of second bases.

8. The method according to any one of claims 2 to 7, wherein the second-type threshold comprises a fourth threshold, and the fourth threshold indicates a maximum value of a sum of the quantity of third bases and the quantity of fourth bases.

9. The method according to any one of claims 2 to 7, wherein the second-type threshold comprises a fifth threshold and a sixth threshold, the fifth threshold indicates a maximum value of the quantity of third bases, and the sixth threshold indicates a maximum value of the quantity of fourth bases.

10. The method according to any one of claims 2 to 9, wherein the parameter configuration further comprises a seventh threshold, and the method further comprises:
    reporting second CSI, wherein the second CSI comprises at least one of position information, amplitude information, and phase information of one or more non-zero elements in a first matrix, a quantity of elements in the one or more non-zero elements is determined based on the seventh threshold, and the first matrix is used to determine the precoding matrix or the channel matrix.

11. The method according to any one of claims 2 to 9, wherein the parameter configuration further comprises a seventh threshold, and the method further comprises:

reporting second CSI, wherein the second CSI comprises a second coefficient, the second coefficient is obtained from first coefficients based on coefficient priority, the first coefficients comprise at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients comprise at least one of position information, amplitude information, and phase information of a largest non-zero coefficient among the first coefficients, the second group of coefficients comprise at least one of position information, amplitude information, and phase information of x non-zero coefficients with a higher priority in a first submatrix of the first coefficients, the first submatrix is a matrix comprising first $K_{MIN}$ rows and first $D_{MIN}$ columns of the first coefficients, the third group of coefficients comprise at least one of position information, amplitude information, and phase information of x1 non-zero coefficients with a lower priority in the first submatrix, the fourth group of coefficients comprise at least one of position information, amplitude information, and phase information of y non-zero coefficients with a higher priority among coefficients in the first coefficients other than those in the first submatrix, the fifth group of coefficients comprise at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side.

12. A channel state information reporting method, comprising:

sending a parameter configuration to a terminal device, wherein the parameter configuration comprises at least one of a first-type threshold and a second-type threshold, the first-type threshold is used by the terminal device to determine at least one of a quantity of first bases and a quantity of second bases, the second-type threshold is used by the terminal device to determine at least one of a quantity of third bases and a quantity of fourth bases, the third basis is used to determine a first basis, and the fourth basis is used to determine a second basis, and the first basis and the second basis are used to determine a precoding matrix or a channel matrix; and

receiving first CSI from the terminal device, wherein the first CSI comprises at least one of the quantity of first bases, the quantity of second bases, the quantity of third bases, and the quantity of fourth bases.

13. The method according to claim 12, wherein the first-type threshold comprises a first threshold, and the first threshold indicates a maximum value of a product of the quantity of first bases and the quantity of second bases.

14. The method according to claim 13, wherein the first-type threshold further comprises a first value and a second value, the first value indicates a minimum value of the quantity of first bases, and the second value indicates a minimum value of the quantity of second bases.

15. The method according to claim 12, wherein the first-type threshold comprises at least one of a second threshold and a third threshold, the second threshold indicates a maximum value of the quantity of first bases, and the third threshold indicates a maximum value of the quantity of second bases.

16. The method according to claim 15, wherein the first-type threshold further comprises at least one of a first value and a second value, the first value indicates a minimum value of the quantity of first bases, and the second value indicates a minimum value of the quantity of second bases.

17. The method according to claim 12, wherein the first-type threshold comprises at least one of a first value and a second value and at least one of a third value and a fourth value, the first value indicates a minimum value of the quantity of first bases, the second value indicates a minimum value of the quantity of second bases, a sum of the third value and the first value indicates a maximum value of the quantity of first bases, and a sum of the fourth value and the second value indicates a maximum value of the quantity of second bases.

18. The method according to any one of claims 12 to 17, wherein the second-type threshold comprises a fourth threshold, and the fourth threshold indicates a maximum value of a sum of the quantity of third bases and the quantity of fourth bases.

19. The method according to any one of claims 12 to 17, wherein the second-type threshold comprises a fifth threshold and a sixth threshold, the fifth threshold indicates a maximum value of the quantity of third bases, and the sixth threshold indicates a maximum value of the quantity of fourth bases.

20. The method according to any one of claims 12 to 19, wherein the parameter configuration further comprises a seventh threshold, the seventh threshold is used to determine a quantity of elements in first coefficients, the first coefficients comprise at least one of position information, amplitude information, and phase information of one or more non-zero elements in a first matrix, and the first matrix is used to determine the precoding matrix or the channel matrix.

21. The method according to any one of claims 12 to 20, wherein the method further comprises:
   receiving second CSI from the terminal device, wherein the second CSI comprises a second coefficient, the second coefficient is obtained from first coefficients based on coefficient priority, the first coefficients comprise at least one of position information, amplitude information, and phase information of a plurality of non-zero elements in a first matrix, a quantity of elements in the first coefficients is determined based on the seventh threshold, the first matrix is used to determine the precoding matrix or the channel matrix, a first group of coefficients, a second group of coefficients, a third group of coefficients, a fourth group of coefficients, and a fifth group of coefficients among the first coefficients have sequentially decreasing priorities, the first group of coefficients comprise at least one of position information, amplitude information, and phase information of a largest non-zero coefficient among the first coefficients, the second group of coefficients comprise at least one of position information, amplitude information, and phase information of x non-zero coefficients with a higher priority in a first submatrix of the first coefficients, the first submatrix is a matrix comprising first $K_{MIN}$ rows and first $D_{MIN}$ columns of the first coefficients, the third group of coefficients comprise at least one of position information, amplitude information, and phase information of x1 non-zero coefficients with a lower priority in the first submatrix, the fourth group of coefficients comprise at least one of position information, amplitude information, and phase information of y non-zero coefficients with a higher priority among coefficients in the first coefficients other than those in the first submatrix, the fifth group of coefficients comprise at least one of position information, amplitude information, and phase information of y1 non-zero coefficients with a lower priority among the coefficients in the first coefficients other than those in the first submatrix, x, x1, y, and y1 are all integers greater than 0, $K_{MIN}$ is a quantity of first bases configured by a network side, and $D_{MIN}$ is a quantity of second bases configured by the network side.

22. A communication apparatus, comprising a module configured to implement the method according to any one of claims 1 to 11.

23. A communication apparatus, comprising a module configured to implement the method according to any one of claims 12 to 21.

24. A computer-readable storage medium, wherein the computer-readable storage medium stores a computer program, the computer program comprises program instructions, and when the program instructions are executed by a processor, the method according to any one of claims 1 to 21 is performed.

25. A communication apparatus, comprising a processor, wherein the processor is configured to process data, to enable the communication apparatus to perform the method according to any one of claims 1 to 21.

26. A chip, comprising:

   a communication interface, configured to receive and send signals of the chip; and
   a processor, configured to execute computer program instructions, to enable a communication apparatus that comprises the chip to perform the method according to any one of claims 1 to 21.

27. A computer program product, wherein when the computer program product runs on a computer, the computer is enabled to perform the method according to any one of claims 1 to 21.

(1) The base station sends configuration information used for downlink CSI measurement and reporting

(2) The base station sends a downlink reference signal to the UE

(3) The UE performs downlink channel measurement based on the reference signal sent by the base station, calculates CSI, and feeds back the CSI

(4) The base station performs scheduling and precoding design based on the CSI reported by the UE, and then sends downlink data

**Base station**

**UE**

FIG. 1

Nf

Nt    H

Nt    S'

B

B    $C_1$    K

K    $C_2$

D

D    $C_3$

T    $F'^H$

T    Nf

FIG. 2

Terminal device 120

Network device 110

Terminal device 130

FIG. 3

Network device          Terminal device

Reference signal    401

402

Perform channel measurement based on the received reference signal to obtain first CSI

Report the first CSI    403

Report second CSI    404

FIG. 4

Network device          Terminal device

Parameter configuration    501

Reference signal    502

503

Perform channel measurement based on the received reference signal to obtain first CSI

Report the first CSI    504

Report second CSI    505

506

Perform scheduling and precoding design based on the first CSI and the second CSI, and then send downlink data    Downlink data

FIG. 5

Network device | Terminal device

Parameter configuration 601

Reference signal 602

603
Perform channel measurement based on the received reference signal to obtain first CSI

Report the first CSI 604

605
The terminal device performs channel measurement based on the received reference signal to obtain a first matrix

606
Obtain a first coefficient based on the first matrix and a seventh threshold

607
When uplink resources used to report the first coefficient are insufficient, obtain a second coefficient based on the first coefficient, and generate second CSI

Report the second CSI 608

609
Perform scheduling and precoding design based on the first CSI and the second CSI, and then send downlink data

Downlink data

FIG. 6

FIG. 7

FIG. 8

| Network device | | Terminal device |
|---|---|---|
| **RRC signaling interaction module** | RRC signaling interaction → | **RRC signaling interaction module** |
| **MAC signaling interaction module** | MAC signaling interaction → | **MAC signaling interaction module** |
| **PHY signaling and data interaction module** | Uplink/Downlink control signaling and uplink/ downlink data interaction → | **PHY signaling and data interaction module** |

FIG. 9

Transceiver circuit          1020

Processing circuit           1010

Apparatus 100

FIG. 10

## INTERNATIONAL SEARCH REPORT

| International application No. |
|---|
| **PCT/CN2024/124758** |

| A. | CLASSIFICATION OF SUBJECT MATTER |
|---|---|
| | H04W 72/20(2023.01)i |

According to International Patent Classification (IPC) or to both national classification and IPC

| B. | FIELDS SEARCHED |
|---|---|

Minimum documentation searched (classification system followed by classification symbols)

IPC: H04W; H04Q

Documentation searched other than minimum documentation to the extent that such documents are included in the fields searched

Electronic data base consulted during the international search (name of data base and, where practicable, search terms used)

CNKI; CNTXT; ENTXTC; DWPI; 3GPP: PMI, 预编码, 矩阵, 精度, 准确, CSI, 参考信号, 状态, 指示, 基底, 个数, 数目, 数量, 阈值, 配置, 参数, precod+, matrix, indicat+, precision, channel, state, reference, substrate, base, number, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115250139 A (HUAWEI TECHNOLOGIES CO., LTD.) 28 October 2022 (2022-10-28) description, paragraphs 3-94 | 1-27 |
| A | CN 111865372 A (HUAWEI TECHNOLOGIES CO., LTD.) 30 October 2020 (2020-10-30) entire document | 1-27 |
| A | CN 113992309 A (HUAWEI TECHNOLOGIES CO., LTD.) 28 January 2022 (2022-01-28) entire document | 1-27 |
| A | CN 116318292 A (HUAWEI TECHNOLOGIES CO., LTD.) 23 June 2023 (2023-06-23) entire document | 1-27 |
| A | WO 2023146246 A1 (LG ELECTRONICS INC.) 03 August 2023 (2023-08-03) entire document | 1-27 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/124758**

| Patent document cited in search report | | | Publication date (day/month/year) | Patent family member(s) | | | Publication date (day/month/year) |
|---|---|---|---|---|---|---|---|
| CN | 115250139 | A | 28 October 2022 | None | | | |
| CN | 111865372 | A | 30 October 2020 | WO | 2020221117 | A1 | 05 November 2020 |
| | | | | CN | 113452419 | A | 28 September 2021 |
| CN | 113992309 | A | 28 January 2022 | WO | 2022022331 | A1 | 03 February 2022 |
| | | | | EP | 4181446 | A1 | 17 May 2023 |
| | | | | US | 2023164004 | A1 | 25 May 2023 |
| CN | 116318292 | A | 23 June 2023 | WO | 2023116516 | A1 | 29 June 2023 |
| | | | | EP | 4429123 | A1 | 11 September 2024 |
| | | | | US | 2024340046 | A1 | 10 October 2024 |
| WO | 2023146246 | A1 | 03 August 2023 | KR | 20240134883 | A | 10 September 2024 |

Form PCT/ISA/210 (patent family annex) (July 2022)

**EP 4 788 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311365236